(19) Europäisches Patentamt
European Patent Office
Office européen des brevets

(11) **EP 3 857 696 B1**

(12) **EUROPÄISCHE PATENTSCHRIFT**

(45) Veröffentlichungstag und Bekanntmachung des Hinweises auf die Patenterteilung:
**25.01.2023 Patentblatt 2023/04**

(21) Anmeldenummer: **19779857.2**

(22) Anmeldetag: **27.09.2019**

(51) Internationale Patentklassifikation (IPC):
*H02M 3/00* *(2006.01)* *H02M 3/335* *(2006.01)*

(52) Gemeinsame Patentklassifikation (CPC):
**H02M 3/335; H02M 3/01; H02M 3/33507; H02M 3/33571;** H02M 1/0058; H02M 3/33573; Y02B 70/10

(86) Internationale Anmeldenummer:
**PCT/EP2019/076231**

(87) Internationale Veröffentlichungsnummer:
**WO 2020/065029 (02.04.2020 Gazette 2020/14)**

(54) **VERFAHREN ZUR STEUERUNG EINES SERIEN-RESONANZ-WANDLERS**

METHOD FOR CONTROLLING A SERIES RESONANT CONVERTER

PROCÉDÉ DE COMMANDE D'UN CONVERTISSEUR À RÉSONANCE SÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2018 DE 102018216749**

(43) Veröffentlichungstag der Anmeldung:
**04.08.2021 Patentblatt 2021/31**

(73) Patentinhaber: **Karlsruher Institut für Technologie 76131 Karlsruhe (DE)**

(72) Erfinder:
• **HEIDINGER, Michael 76227 Karlsruhe (DE)**
• **HEERING, Wolfgang 76297 Stutensee (DE)**
• **KLING, Rainer 69221 Dossenheim (DE)**

(74) Vertreter: **Altmann Stößel Dick Patentanwälte PartG mbB Theodor-Heuss-Anlage 2 68165 Mannheim (DE)**

(56) Entgegenhaltungen:
• **VORPERIAN V ET AL: "A complete DC analysis of the series resonant converter", PROCEEDINGS OF THE ANNUAL POWER ELECTRONICS SPECIALISTS CONFERENCE. (PESC). BLACKSBURG, JUNE 22 - 26, 1987; [PROCEEDINGS OF THE ANNUAL POWER ELECTRONICS SPECIALISTS CONFERENCE. (PESC)], NEW YORK, IEEE, US, 14. Juni 1982 (1982-06-14), Seiten 85-100, XP032756523, ISSN: 0275-9306, DOI: 10.1109/PESC.1982.7072398 ISBN: 978-99963-23-27-0 [gefunden am 2015-03-27] in der Anmeldung erwähnt**
• **MOUNIKA D ET AL: "ADC controlled half-bridge LC series resonant converter for LED lighting", 2017 2ND INTERNATIONAL CONFERENCE ON COMMUNICATION AND ELECTRONICS SYSTEMS (ICCES), IEEE, 19. Oktober 2017 (2017-10-19), Seiten 1037-1042, XP033332570, DOI: 10.1109/CESYS.2017.8321241 [gefunden am 2018-03-21] in der Anmeldung erwähnt**

**Beschreibung**

Gebiet der Erfindung

Die vorliegende Erfindung ist auf dem Gebiet der Elektrotechnik angesiedelt und betrifft ein Verfahren zur Steuerung eines Serien-Resonanz-Wandlers und ein Computerprogramm, das dazu eingerichtet ist, Schritte dieses Verfahrens auszuführen.

Stand der Technik

Aus dem Stand der Technik sind verschiedene Verfahren zum Betrieb eines Serien-Resonanz-Wandlers (engl. *series resonant converter,* SRC) bekannt. Der Serien-Resonanz-Wandler zählt zu den DC-DC Wandlern, die einen Serien-Resonanz-Schwingkreis aufweisen, wobei eine Gleichspannung (engl. *direct current,* DC) in eine Wechselspannung (engl. *alternating current,* AC) umgesetzt wird, die hieran anschließend wieder gleichgerichtet wird.

Der Serien-Resonanz-Wandler mit galvanischer Trennung umfasst eine Halbbrücke oder eine Vollbrücke, die den Serien-Resonanz-Schwingkreis mit einer unipolaren oder bipolaren Rechteckspannung ansteuert. Der Serien-Resonanz-Schwingkreis ist meist Teil eines Primärkreises, welcher mit einer Primärseite eines Transformators verbunden ist. Alternativ kann der Serien-Resonanz-Schwingkreis aber auch in einem Sekundärkreis angebracht sein, welcher mit einer Sekundärseite des Transformators verbunden ist. Auf der Sekundärseite des Transformators befindet sich ein Gleichrichter-Netzwerk, welches die erzeugte Wechselspannung wieder in eine Gleichspannung umwandelt. Der Serien-Resonanz-Wandler ohne galvanische Trennung umfasst in einem Primärkreis ebenfalls eine Halbbrücke oder eine Vollbrücke, welche an den Serien-Resonanz-Schwingkreis angeschlossen ist, dessen Ausgangsspannung mittels eines sich in dem Sekundärkreis befindlichen Brückengleichrichters gleichgerichtet wird.

In dem Primärkreis liegt eine Zwischenkreisspannung $U_{dc}$ (engl. *DC link voltage*) an, während an dem Sekundärkreis eine Ausgangsspannung $U_{Cout}$ (engl. *output voltage*) und ein Ausgangsstrom $I_{out}$ (engl. *output current*) abgreifbar sind. Hierbei kann der Primärkreis als Halbbrücke ausgestaltet sein und über eine Konfiguration mit zwei Schaltern verfügen, welche dazu eingesetzt werden können, um die Zwischenkreisspannung $U_{dc}$ an einen Schaltknoten SW (engl. *switch node*) anzulegen oder den Schaltknoten SW mit einem Nullpotential zu verbinden. Anstelle des Begriffs "Schaltknoten" kann auch der Begriff "Schaltpunkt" verwendet werden. Alternativ kann der Primärkreis eine Vollbrücke aufweisen und über 4 Schalter verfügen. Eine Periode, innerhalb der die Schalter abwechselnd betätigt werden, wird als "Schaltperiode" bezeichnet, der zugehörige Kehrwert als "Schaltfrequenz".

Nachteilig an den bekannten Verfahren zum Betrieb eines Serien-Resonanz-Wandlers ist eine Regelung des Wandlers mittels eines Regelkreises oder einer Regelschleife, wofür ausschließlich die momentane Ausgangsspannung $U_{Cout}$ verwendet wird. Hierzu wird üblicherweise die momentane Ausgangsspannung $U_{Cout}$ messtechnisch erfasst und dadurch ein vorgegebener Sollwert nachgeführt. Üblicherweise erfolgt die Steuerung mittels einer Schaltfrequenz; es sind aber auch Anpassungen mittels eines Tastgrades bekannt. Bei Einsatz einer Vollbrücke kann hierzu auch die Phase verwendet werden. Insbesondere um Störgrößen zeitlich zu puffern und zu mitteln und um auf diese Weise eine hinreichende Qualität der Regelung zu erreichen, werden große Speicherkondensatoren in dem Primärkreis und in dem Sekundärkreis eingesetzt. Derartige Speicherkondensatoren benötigen einen großen Bauraum, wobei häufig Elektrolytkondensatoren eingesetzt werden, deren Lebensdauer begrenzt ist. Weiterhin werden die Serien-Resonanz-Wandler meist als Spannung-zu-Spannungs-Wandler beschrieben, welche ein ungünstiges Regelverhalten aufweisen können, das sich insbesondere in einem Überschwingen äußern kann.

Vorpérian, V. und Cuk, S., A complete DC analysis of the series resonant converter, in: 1982 IEEE Power Electronics Specialists conference, 1982, S. 85-100, beschreiben das Zeitverhalten der individuellen Ströme des Serien-Resonanz-Wandlers unter Verwendung einer Zeitbereich-Analyse (engl. *time domain analysis*). Hierzu wird eine komplexe, nicht analytisch lösbare Funktion vorgestellt, welche den Serien-Resonanz-Wandler als Spannung-zu-Spannungswandler modelliert.

Mounika, D. und Porpandiselvi, S.: ADC Controlled Half-Bridge LC Series Resonant Converter for LED Lighting, in: 2nd International Conference on Communication and Electronics Systems, ICCES, 2017, S. 1037-1042, beschreiben ein Ansteuerungsverfahren für LED-Anwendungen. Dieses Verfahren bezieht sich auf einen Halbbrücken-Serien-Resonanz-Wandler, wobei ein Ausgang des Wandlers zur Ansteuerung einer LED eingesetzt wird. Hierbei wird ein asymmetrischer Tastgrad verwendet.

A. Polleri, Taufik und M. Anwari, Modeling and Simulation of Paralleled Series-Loaded-Resonant Converter, Second Asia International Conference on Modelling & Simulation 2008, IEEE Computer Society, S. 974-979, beschreiben eine Modellierung eines Serien-Resonanz-Wandlers, welcher mit mehreren Resonanzkreisen ausgestattet ist und eine Verwendung in einer Stromversorgung mit hohen Spannungen und hohen Frequenzen für medizinische Anwendungen findet.

DE 10 2015 121 991 A1 offenbart ein Verfahren, welches eine zusätzliche Tastgrad-Einstellung in einem Serien-Resonanz-Wandler, insbesondere beim Anlauf und/oder zur Strombegrenzung bei Ausgangskurzschluss, verwendet.

Weitere Verfahren zur Steuerung eines Serien-Resonanz-Wandlers werden in DE 101 43 251 A1 und US 2012/0262954 A1 offenbart.

M. Heidinger, C. Simon, F. Denk, R. Kling, W. Heering, Integrated PFC and series resonant frequency converter analysis and control, 19th European Conference on Power Electronics and Applications, 11.-14. Sept. 2017, DOI: 10.23919/EPE17ECCEEurope.2017.8099093, beschreiben einen Regelalgorithmus für eine integrierte Leistungsfaktorkorrektur und einen Serien-Resonanz-Wandler mit zwei Schaltern, der es erlaubt, den AC-Eingangsstrom und den DC-Ausgangsstrom unabhängig voneinander zu regeln. Hierzu wird ein gemittelter Wert für den Ausgangsstrom $\overline{I}_{out}$ mittels einer Übertragungsfunktion eingestellt, wobei die Übertragungsfunktion eine Funktion der Ausgangsspannung $U_{out}$, der Kondensatorspannung $U_C$, der Zwischenkreisspannung $U_{dc}$, der Induktivität $L_i$, der Schaltperiode $t_c$ und des Tastgrades $D$ ist, wobei die Schaltperiode $t_c$, der Tastgrades $D$ und die Kondensatorspannung $U_C$ mittels eines iterativen Algorithmus bestimmt werden.

Aufgabe der Erfindung

Ausgehend hiervon, besteht die Aufgabe der vorliegenden Erfindung darin, ein Verfahren zur Steuerung eines Serien-Resonanz-Wandlers und ein Computerprogramm, welches dazu eingerichtet ist, Schritte dieses Verfahrens auszuführen, bereitzustellen, die die bekannten Nachteile und Einschränkungen des Standes der Technik zumindest teilweise überwinden.

Das Verfahren zur Steuerung des Serien-Resonanz-Wandlers soll insbesondere den Betrieb des Serien-Resonanz-Wandlers mittels einer linearisierenden Vorsteuerung ermöglichen. Dadurch soll es ermöglicht werden, kleinere Kondensatoren verwenden zu können, um die bisher eingesetzten Elektrolytkondensatoren ersetzen zu können, um auf diese Weise die Lebensdauer des Schaltnetzteiles zu erhöhen.

Offenbarung der Erfindung

Diese Aufgabe wird durch ein Verfahren zur Steuerung eines Serien-Resonanz-Wandlers gemäß Anspruch 1 und ein Computerprogramm gemäß Anspruch 16, welches dazu eingerichtet ist, Schritte dieses Verfahrens durchzuführen, gelöst. Vorteilhafte Weiterbildungen sind in den abhängigen Ansprüchen definiert.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf', "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne dass hierdurch die Möglichkeit eingeschränkt wird, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten unangetastet bleiben, die hierdurch eingeleiteten Merkmale mit anderen Merkmalen zu kombinieren, seien es optionale oder nicht-optionale Merkmale.

In einem ersten Aspekt betrifft die vorliegende Erfindung ein Verfahren zur Steuerung eines Serien-Resonanz-Wandlers (engl. *series resonant converter,* SRC). Der Begriff des "Serien-Resonanz-Wandlers" bezeichnet hierbei eine Schaltungstopologie für ein elektrisches Schaltnetzteil, welches dazu eingerichtet ist, um eine an einem Primärkreis anliegende Gleichspannung, welche auch als Zwischenkreisspannung $U_{dc}$ (engl. *DC link voltage*) bezeichnet wird, in eine an einem Ausgang eines Sekundärkreises anliegende Gleichspannung, welche auch als Ausgangsspannung $U_{cout}$ (engl. *output voltage*) bezeichnet wird, zu wandeln, wobei der Primärkreis und der Sekundärkreis galvanisch voneinander getrennt sein können. Wie eingangs beschrieben, können jedoch auch Serien-Resonanz-Wandler ohne galvanische Trennung bereitgestellt werden. Eine galvanische Trennung kann bevorzugt mittels eines Transformators erfolgen; anderen Arten der Potentialtrennung sind jedoch möglich. Hierbei wird eine elektrische Spannung, welche über einen Zeitraum ihr Vorzeichen nicht ändert, als "Gleichspannung" bezeichnet. Demgegenüber wird eine elektrische Spannung deren Vorzeichen sich über einen Zeitraum in regelmäßiger Wiederholung wechselt, als "Wechselspannung" bezeichnet. Unter einer "unipolaren Rechteckspannung" wird eine Spannung verstanden, welche innerhalb eines Zeitraums zwischen einem positiven Wert und Nullpotential wechselt. Unter "galvanischer Trennung" wird hierbei verstanden, dass keine elektrische Leitung zwischen dem Primärkreis und dem Sekundärkreis besteht, so dass beide Potentiale voneinander getrennt sind. Die galvanische Trennung kann im Falle des Serien-Resonanz-Wandlers bevorzugt mittels eines Transformators erfolgen, welcher den Austausch einer elektrischen Leistung zwischen dem Primärkreis und dem Sekundärkreis mittels induktiver Kopplung ermöglicht. Andere Möglichkeiten der galvanischen Trennung sind jedoch möglich.

Wie unten näher ausgeführt, umfasst der "Serien-Resonanz-Wandler" hierbei einen in dem Primärkreis angeordneten Schwingkreis, der mit einem in dem Sekundärkreis vorhandenen Gleichrichter-Netzwerk in Serie geschaltet ist. Der in dem Primärkreis angeordnete Schwingkreis verfügt über mindestens eine in Reihe geschaltete Kapazität $C_1$ und mindestens eine Induktivität $L_i$, welche in Form eines Kondensators und einer Spule vorliegen können, und weiterhin über eine Schalterkonfiguration, umfassend zwei Schalter $S_1$, $S_2$. Hierzu kann während einer vorgegebenen Zeitperiode jeweils nur einer der beiden Schalter auf "AN" gestellt werden, während der andere der beiden Schalter während derselben Zeitperiode auf "AUS" gestellt ist. Durch diese Schalterkonfiguration, die auch als "Halbbrücke" bezeichnet wird, kann eine unipolare Rechteckspannung erzeugt werden, welche zwischen der Zwischenkreisspannung $U_{dc}$ und einem Nullpotential an einem Schaltknoten (engl. *switch node,* SW) frei in Frequenz und Tastgrad eingestellt werden kann. In einer alternativen Ausgestaltung kann ein anderes Verfahren zur Erzeugung der unipolaren Rechteckspannung in der Halbbrücke dienen, insbesondere ein Verstärker.

Mittels der Halbbrücke oder des Verstärkers kann hier eine Wechselspannung mit Gleichspannungsanteil erzeugt werden. Die Kapazität $C_1$ kann hierbei dazu dienen, einen Gleichstromanteil einer vorherigen Wechselspannung zu unterdrücken. Die verbleibende Wechselspannung kann durch induktive Kopplung mittels des Transformators aus dem Primärkreis in den Sekundärkreis übertragen werden. In einer besonderen Ausgestaltung kann an dem Schaltknoten SW eine weitere Schaltung, insbesondere eine Schaltung zur Leistungsfaktorkorrektur (engl. *power factor correction,* PFC) hinzugefügt werden.

Die Zeitperiode, innerhalb dessen jeweils zunächst ein erster Schalter $S_1$ auf "AN" gestellt wird und hieran anschließend ein zweiter Schalter $S_2$ auf "AN" gestellt wird, wird als "Schaltperiode" $t_p$ bezeichnet, der zugehörige

$$f_p = \frac{1}{t_p}$$

Kehrwert als "Schaltfrequenz" . Im Falle des Serien-Resonanz-Wandlers kann während einer ersten Zeitperiode, in dem der erste Schalter $S_1$ auf "AN" gestellt ist, eine Schaltspannung $U_{SW} > 0$ anliegen, dagegen während einer zweiten Zeitperiode, in dem der zweite Schalter $S_2$ auf "AN" gestellt ist, die Schaltspannung $U_{SW} = 0$ betragen. Hierbei kann ein "Tastgrad" D (engl. *duty cycle*) angeben werden, der dadurch definiert ist, dass die Zeit $D \cdot t_p$ eine Zeitdauer angibt, während welcher die Schaltspannung $U_{SW} = 0$ beträgt. Der Tastgrad kann alternativ auch als "Tastverhältnis" bezeichnet werden. Ein Tastgrad D = 0,5 bedeutet hierbei, dass der erste Schalter $S_1$ genauso lange auf "AN" gestellt wird wie der zweite Schalter $S_2$, so dass innerhalb jeder Schaltperiode $t_p$ genauso lange eine Schaltspannung $U_{SW} > 0$ anliegt wie die Schaltspannung $U_{SW} = 0$ beträgt. Bei anderen Tastgraden D ergeben sich entsprechend abweichende Werte.

Erfindungsgemäß erfolgt der Betrieb des Serien-Resonanz-Wandlers - im Unterschied zum Stand der Technik, der eine Regelung des Serien-Resonanz-Wandlers auf Basis der momentanen Ausgangsspannung $U_{Cout}$ verwendet - mittels eines Verfahrens zur Steuerung eines des Serien-Resonanz-Wandlers. Während der Begriff der "Regelung" eine Betriebsweise kennzeichnet, in welcher die momentane Ausgangsspannung $U_{Cout}$ messtechnisch erfasst und eine Abweichung zu einem vorgegebenen Sollwert ermittelt wird, um mittels eines Regelkreises oder einer Regelschleife die Abweichung zu verringern, wobei eine messtechnisch erfasste Größe als Eingangsgröße für den Regelkreis oder die Regelschleife dient, wird bei der als "Steuerung" bezeichneten Betriebsweise mindestens eine Ausgangsgröße unmittelbar dadurch erhalten, dass mindestens eine Eingangsgröße derart in eine bekannte Beziehung eingeht, das sich hieraus die gewünschte Ausgangsgröße direkt ermitteln lässt. Die bekannte Beziehung kann hierbei auch als "Übertragungsfunktion" bezeichnet werden. Weiterhin werden im Stand der Technik der Tastgrad oder die Schaltfrequenz ohne eine Betrachtung etwaiger Störgrößen, wie die Eingangsspannung, angegeben. Wie eingangs dargestellt, ist aus dem Stand der Technik weiterhin die Verwendung eines Serien-Resonanz-Wandlers als Spannungs-zu-Spannungs-Wandler bekannt. Das vorgeschlagene Regelverfahren beschreibt den Serien-Resonanz-Wandler als Spannungs-zu-Stromwandler, womit eine schnellere und robustere Regelung ermöglicht wird. Darüber hinaus wird hier - im Unterschied zum Stand der Technik - eine Störgrößenbetrachtung vorgenommen, welche den Einfluss etwaiger Störgrößen, wie z.B. eine sich ändernde Eingangsspannung, mit einbezieht.

Erfindungsgemäß wird vorgeschlagen, die Steuerung des Serien-Resonanz-Wandlers dadurch vorzunehmen, indem ein gemittelter Wert für den Ausgangsstrom $\overline{I}_{out}$ mittels einer Übertragungsfunktion eingestellt wird, wobei die Übertragungsfunktion eine Funktion der Zwischenkreisspannung $U_{dc}$, der Ausgangsspannung $U_{Cout}$, der Schaltperiode $t_p$, des Tastgrades $D$ und optional der Kapazität $C_1$ ist, wobei die Schaltperiode $t_p$ oder der Tastgrad $D$ oder sowohl die Schaltperiode $t_p$ als auch der Tastgrad $D$ eingestellt werden. Der Begriff "einstellen" in Bezug auf die Größen Schaltperiode $t_p$ und Tastgrad $D$ bezeichnet hierbei eine Möglichkeit, diese Größen, insbesondere in weiten Grenzen frei zu wählen, um auf diese Weise möglichst viele Werte für den gemittelten Wert des Ausgangsstrom $\overline{I}_{out}$, welcher als die Ausgangsgröße dient, erhalten zu können. Die beiden Größen Schaltperiode $t_p$ und Tastgrad $D$ lassen sich, wie oben und unten näher dargestellt, durch Betätigung der in dem Primärkreis vorgesehenen Schalter $S_1$, $S_2$ sowohl auf sehr einfache Weise und unabhängig voneinander einstellen als auch jeweils über einen großen Bereich frei wählen und können somit als Freiheitsgrade dienen. Beispielsweise kann bei konstanter Schaltperiode $t_p$ lediglich der Tastgrad $D$ geändert werden. Alternativ kann bei konstantem Tastgrad $D$ lediglich die Schaltperiode $t_p$ geändert werden. Kombinationen hiervon sind ebenfalls möglich. Beispielsweise können in der Ausgestaltung, in welcher an dem Schaltknoten SW eine Schaltung zur Leistungsfaktorkorrektur hinzugefügt wird, sowohl die Schaltperiode $t_p$ als auch der Tastgrad $D$ als zwei Freiheitsgrade eingesetzt werden. Damit weist das hier vorgeschlagene Verfahren einen wesentlichen Vorteil bei dem Betrieb des Serien-Resonanz-Wandlers auf. Hierbei kann der Serien-Resonanz-Wandler insbesondere im Hinblick auf einen möglichst geringen Ausgangsspannungsripple, d.h. eine möglichst geringe Schwankung der Ausgangsspannung $U_{Cout}$, oder auf eine möglichst geringe Verlustleistung, d.h. möglichst geringe Verluste bei dem Betrieb des Serien-Resonanz-Wandlers, optimiert werden. Andere Arten von Optimierungen, etwa hinsichtlich kleinerer Ausgangs-Kondensatoren, sind jedoch ebenso möglich.

In einer bevorzugten Ausgestaltung kann für den Tastgrad D ein Wert von 0,1 bis 0,9, besonders bevorzugt von 0,2 bis 0,8, insbesondere von 0,4 bis 0,6, gewählt werden. Alternativ oder zusätzlich kann für die die Schaltperiode $t_p$ bevorzugt ein Wert von 0.1 µs bis 100 ms, besonders bevorzugt von 0.5 µs bis 5 ms, insbesondere von 1 µs bis 1 ms gewählt werden. Andere Werte für die Schaltperiode $t_p$ und/oder den Tastgrad $D$ sind jedoch möglich.

Demgegenüber können hier die Größen Zwischenkreisspannung $U_{dc}$, Kondensatorspannung $U_{C1}$ und Ausgangsspannung $U_{Cout}$ als feste Größen der Übertragungsfunktion und nicht als weitere einstellbare Eingangsgrößen betrachtet werden, da sich diese während einer Schaltperiode $t_p$ nur marginal ändern. Das kann insofern zutreffend sein, als diese beiden weiteren Größen üblicherweise nur schwer oder kaum zu ändernden technischen Zwängen und Gegebenheiten unterliegen und sich daher weder auf einfache Weise kurzfristig einstellen noch kurzfristig über einen großen Bereich frei wählen lassen. Es ist jedoch vorteilhaft, wenn darauf verzichtet werden kann, diese beiden weiteren Größen als einstellbare Eingangsgrößen zu verwenden, da dann die zugehörigen technischen Zwänge bei dem Betrieb des Serien-Resonanz-Wandlers weitgehend außer Betracht bleiben können. In einer weiteren Ausgestaltung kann alternativ oder zusätzlich auch die in dem Schwingkreis vorhandene Induktivität $L_i$ geändert werden; in der Praxis kann dies jedoch aufwändiger sein als die oben vorgeschlagene Änderung der Größen Schaltperiode $t_p$ und Tastgrad D.

Weiterhin kann somit der gemittelte Wert für den Ausgangsstrom $\overline{I}_{out}$ durch Anwendung der gewählten Übertragungsfunktion eingestellt werden. Damit ist es in vorteilhafter Weise möglich, den mittleren Ausgangsstrom $\overline{I}_{out}$, der an einem Ausgang des Sekundärkreises anliegt, in weiten Grenzen frei zu wählen, und zwar weitgehend unabhängig von der zugehörigen Ausgangsspannung $U_{Cout}$ und der Eingangsspannung $U_{dc}$. Da die an dem Ausgang des Sekundärkreises anliegende Ausgangsleistung $P_{out}$ bekanntermaßen das Produkt aus der Ausgangsspannung $U_{Cout}$ und dem mittleren Ausgangsstrom $\overline{I}_{out}$ darstellt, kann auf diese Weise auch die Ausgangsleistung $P_{out}$ in besonders vorteilhafter Weise sowohl auf sehr einfache Weise eingestellt als auch über einen großen Bereich frei gewählt werden.

Wie bereits erwähnt, umfasst der Primärkreis des Serien-Resonanz-Wandlers einen Schwingkreis, welcher über mindestens eine in Reihe geschaltete Kapazität $C_1$, insbesondere in Form mindestens eines Kondensators, und mindestens eine Induktivität $L_i$, insbesondere in Form mindestens einer Spule, verfügen kann. Aus der vorgeschlagenen Anordnung der Kapazität $C_1$ und der Induktivität $L_i$ in Reihe kann bekanntermaßen eine zugehörige Resonanzfrequenz $f_R$ des Schwingkreises ermittelt werden. Üblicherweise zeigt der momentane Ausgangsstrom $\overline{I}_{out}$ des Serien-Resonanz-Wandlers einen sinusförmigen Verlauf. Erfolgt jedoch in bevorzugter Weise ein Betrieb des Serien-Resonanz-Wandlers bei einer Frequenz oberhalb der Resonanzfrequenz $f_R$, so kann eine erste Taylor-Näherung des sinusförmigen Verlaufs verwendet werden, wodurch eine lineare Näherung erhalten werden kann. Hierbei kann der Betrieb des Serien-Resonanz-Wandlers bei einer Frequenz bevorzugt oberhalb dem 1,5-fachen, besonders bevorzugt dem 2-fachen (Doppelten), der Resonanzfrequenz $f_R$ erfolgen. Eine höhere Frequenz für den Betrieb des Serien-Resonanz-Wandlers ist jedoch möglich und kann technisch verwendet werden.

In einer besonders bevorzugten Ausgestaltung der vorliegenden Erfindung kann der gemittelte Wert für den Ausgangsstrom $\bar{I}_{out}$ mittels der folgenden Übertragungsfunktion gemäß Gleichung (1)

$$\bar{I}_{out} = \frac{D(1-D)\, U_{dc}^2 - U_{Cout}^2}{4\, L_i\, U_{dc}} \cdot t_p \qquad (1)$$

bestimmt werden. In einer bevorzugten Ausgestaltung kann die Induktivität $L_i$ in Gleichung (1) als konstant betrachtet werden. Die beiden weiteren Größen, nämlich die Zwischenkreisspannung $U_{dc}$ und die Ausgangsspannung $U_{Cout}$ können, wie oben dargestellt, vorzugsweise ebenfalls als feste Größen betrachtet werden. Im Gegensatz hierzu können die beiden Größen Schaltperiode $t_p$ und Tastgrad $D$, wie oben und unten näher dargestellt, durch Betätigung der in dem Primärkreis vorgesehenen Schalter $S_1$, $S_2$ auf sehr einfache Weise unabhängig voneinander eingestellt als auch jeweils über einen großen Bereich frei gewählt werden.

Aufgrund der in Gleichung (1) dargestellten linearen Beziehung zwischen dem Ausgangsstrom $\bar{I}_{out}$ und der Schaltperiode $t_p$ kann der gemittelte Ausgangsstrom $\bar{I}_{out}$ durch die Wahl der Schaltperiode $t_p$ sehr einfach festgelegt werden. Alternativ oder zusätzlich kann die Gleichung (1) auch analytisch nach dem Tastgrad $D$ aufgelöst werden, welches in quadratischer Beziehung zu dem Ausgangsstrom $\bar{I}_{out}$ steht, insbesondere mittels eines Mikroprozessors, welcher zur Lösung einer quadratischer Beziehung, etwa mittels der bekannten Lösungsformel für Quadratische Gleichungen, eingerichtet ist. Alternativ oder zusätzlich kann zur Lösung der Gleichung numerisches Lösungsverfahren eingesetzt werden, insbesondere das Euler-Verfahren. Andere Ausgestaltungen sind jedoch denkbar; insbesondere eine Lösung denkbar, in welcher ein zweiter, zusätzlicher Wert gesetzt wird und dadurch beide Größen Schaltperiode $t_p$ und Tastgrad $D$ benötigt werden.

In einer besonders bevorzugten Ausgestaltung des vorliegenden Verfahrens können innerhalb einer einzigen Schaltperiode $t_p$ die folgenden Verfahrensschritte durchgeführt werden, die im Folgenden einfach auch als "Schritte" bezeichnet werden, wobei die angegebene Reihenfolge, beginnend mit Schritt a), auf den anschließend die Schritte b), c) und d) wie angegeben folgen, bevorzugt ist:

a) Einschalten einer in dem Primärkreis angeordneten Halbbrücke, wodurch ein Strom $I_i$ durch die Induktivität $L_i$ zeitlich zunimmt, bis ein Nulldurchgang für den Strom $I_i$ auftritt;
b) weitere zeitliche Zunahme des Strom $I_i$, bis ein Abschalten der in dem Primärkreis angeordneten Halbbrücke erfolgt;
c) zeitliche Abnahme des Stroms $I_i$, bis ein Nulldurchgang für den Strom $I_i$ auftritt; und
d) weitere zeitliche Abnahme des Stroms $I_i$.

Gemäß Schritt a) erfolgt ein Einschalten der Halbbrücke, welche sich in dem Primärkreis befindet, insbesondere durch eine Betätigung des ersten Schalters $S_1$, der auf "AN" gestellt ist, so dass eine Schaltspannung $U_{SW} > 0$ anliegen kann, während der zweite Schalter $S_2$ auf "AUS" gestellt bleibt. Dadurch kann ein Strom $I_i$ durch die Induktivität $L_i$ während eines ersten Zeitraums $\Delta t_1$ solange zunehmen, bis für den Strom $I_i$ ein Nulldurchgang beobachtet werden kann. Wie oben bereits erwähnt, bezeichnet Begriff der "Halbbrücke" hierbei eine Konfiguration, welche zwei Schalter in Serie umfasst, wobei mittels des ersten Schalters $S_1$, solange dieser auf "AN" gestellt ist, an dem Schaltknoten SW die Zwischenkreisspannung $U_{dc}$ als Versorgungsspannung angelegt wird und wobei mittels des zweiten Schalters $S_2$, solange dieser auf "AN" gestellt ist, an dem Schaltknoten SW ein Nullpotential angelegt wird, wobei immer nur einer der beiden Schalter $S_1$, $S_2$ angeschaltet ist. In einer alternativen, technisch jedoch weniger vorteilhaften Ausführung, kann die Halbbrücke auch in Form einer anderen Ausgestaltung vorliegen, insbesondere in Form eines Verstärkers. Der Begriff der "Vollbrücke" bezeichnet hierbei zwei Halbbrücken, welche beide mit der Zwischenkreisspannung $U_{dc}$ als Versorgungsspannung verbunden sind, und deren Serien-Resonanz-Schwingkreis zwischen den Mittelpunkten der Halbbrücke liegt. Der Begriff des "Nulldurchgangs" bezeichnet hierbei einen Zeitpunkt $t_0$, an welchem der Strom $I_i = 0$ ist, wobei unmittelbar vor dem Zeitpunkt $t_0$ der Strom $I_i < 0$ ist und unmittelbar nach dem Zeitpunkt $t_0$ der Strom $I_i > 0$ ist, oder wobei unmittelbar vor dem Zeitpunkt $t_0$ der Strom $I_i > 0$ ist und unmittelbar nach dem Zeitpunkt $t_0$ der Strom $I_i < 0$ ist.

Gemäß Schritt b) tritt während eines zweiten Zeitraums $\Delta t_2$ eine weitere Zunahme des Strom $I_i$ durch die Induktivität $L_i$ auf, während die Halbbrücke eingeschaltet bleibt, insbesondere indem der erste Schalter $S_1$ auf "AN" gestellt bleibt, so dass nach wie vor die Schaltspannung $U_{SW} > 0$ anliegen kann. Der zweite Zeitraum $\Delta t_2$ endet, wenn ein Abschalten der in dem Primärkreis angeordneten Halbbrücke erfolgt. Dies kann insbesondere durch eine weitere Betätigung des ersten Schalters $S_1$ erfolgen, der auf "AUS" gestellt ist, so dass die Schaltspannung $U_{SW} = 0$ gesetzt werden kann.

Damit wird nun Schritt c) durchgeführt. Hierbei ist der zweite Schalter $S_2$ auf "AN" gestellt ist, so dass die Schaltspannung $U_{SW} = 0$ betragen kann. Hierbei tritt während eines dritten Zeitraums $\Delta t_3$ eine Abnahme des Strom $I_i$ durch die Induktivität $L_i$ auf, bis ein weiterer Nulldurchgang für den Strom $I_i$ beobachtet werden kann.

Gemäß Schritt d) tritt während eines vierten Zeitraums $\Delta t_4$ eine weitere Abnahme des Strom $I_i$ durch die Induktivität $L_i$ auf, während die Halbbrücke ausgeschaltet bleibt, insbesondere indem der zweite Schalter $S_2$ auf "AN" gestellt bleibt, so dass nach wie vor die Schaltspannung $U_{SW} = 0$ betragen kann. Der vierte Zeitraum $\Delta t_4$ endet, wenn in einer weiteren Schaltperiode $t_p$ gemäß Schritt a) wiederum ein Anschalten der in dem Primärkreis angeordneten Halbbrücke erfolgt. Dies kann insbesondere durch eine weitere Betätigung des ersten Schalters $S_1$ erfolgen, der wieder auf "AN" gestellt ist, so dass die Schaltspannung wieder auf $U_{SW} > 0$ gesetzt werden kann.

Das Schaltmuster der Halbbrücke kann somit in Verbindung mit dem Schwingkreis die beschriebenen zeitlichen Verläufe von Strom und Spannung erzeugen. Hierbei kann die Schaltperiode $t_p$ während jedem der angegebenen Zeiträume beginnen, beispielsweise mit Schritt c), auf den dann die Schritt d), a) und b) in der angegebenen Reihenfolge durchgeführt werden. Für weitere Einzelheiten in Bezug auf die hier beschriebenen Schritte a) bis d) wird auf die nachfolgenden Ausführungsbeispiele verwiesen.

In einer besonderen Ausgestaltung kann zusätzlich zu der hier vorgeschlagenen Steuerung des Serien-Resonanz-Wandlers auch eine Regelung des Serien-Resonanz-Wandlers vorgenommen werden. Hierfür kann insbesondere ein Regelkreis oder eine Regelschleife in den Schaltkreis mit eingebracht werden. Hierdurch lassen sich Geschwindigkeit, Genauigkeit und die Stabilität des Serien-Resonanz-Wandlers weiter erhöhen. Bei der hier vorgeschlagenen Steuerung des Serien-Resonanz-Wandlers sind sowohl die Zwischenkreisspannung $U_{dc}$ als auch die Ausgangsspannung $U_{Cout}$ bekannt. Dadurch, dass ein Regelkreis oder eine Regelschleife robust gegen Schwankungen der Zwischenkreisspannung $U_{dc}$ ist, da diese bereits in die analytisch lösbare Übertragungsfunktion mit einfließt, kann der mindestens eine Kondensator in dem Primärkreis deutlich kleiner gewählt werden.

In einem weiteren Aspekt betrifft die vorliegende Erfindung ein Computerprogramm, welches dazu eingerichtet ist, Schritte des hierin beschriebenen Verfahrens zur Steuerung eines Serien-Resonanz-Wandlers durchzuführen.

Hierzu kann das Computerprogramm Algorithmen umfassen, welche zur Durchführung einzelner oder mehrerer Verfahrensschritte oder eines Teils davon besonders ausgestaltet ist. Das Computerprogramm kann hierbei insbesondere dazu ausgestaltet sein, um einen Mikroprozessor oder einen Mikrokontroller zu steuern, welcher mit dem Serien-Resonanz-Wandler in Wechselwirkung treten kann, beispielsweise durch Steuerung der Schalter $S_1$, $S_2$, wodurch sich die Schaltperiode $t_p$ und der Tastgrad $D$ sehr einfach einstellen lassen. Dazu kann vorzugsweise eine üblicherweise integrierte Einheit zur Pulsweitenmodulation (PWM) eingesetzt werden. Alternativ oder zusätzlich kann der Mikroprozessor zur Einstellung oder zur Auslesung der Zwischenkreisspannung $U_{dc}$, der Ausgangsspannung $U_{Cout}$, des Aus-gangsstroms $\overline{I}_{out}$ oder weiterer elektrischer Größen in dem Serien-Resonanz-Wandler eingesetzt werden. In einer alternativen Ausgestaltung kann eine Implementierung des Computerprogramms zur Durchführung des vorliegenden Verfahrens in mindestens einer anwendungsspezifisch integrierten Schaltung (engl. *application-specified integratedcircuit;* ASIC) in einen Universalschaltkreis, insbesondere in einem FPGA (engl. *field-programmable gate array*) oder als FPAA (engl. *field-programmable analog array*) vorliegen. Weitere Arten der Ausführung des Computerprogramms sind jedoch möglich. Für weitere Einzelheiten zur Ausgestaltung des Computerprogramms wird auf die übrige Beschreibung und die Ausführungsbeispiele verwiesen.

Vorteile der Erfindung

Das vorliegende Verfahren zur Steuerung eines Serien-Resonanz-Wandlers weist eine Reihe von Vorteilen gegenüber aus dem Stand der Technik bekannten Verfahren zum Betrieb eines Serien-Resonanz-Wandlers auf. Das hierin beschriebene Verfahren ermöglicht es, einen gemittelten Wert für den Ausgangsstrom $\overline{I}_{out}$ eines Serien-Reso-nanz-Wandlers über die Schaltfrequenz $f_p$ und/oder über den Tastgrad $D$ zu steuern, und zwar mit einer hohen Genauigkeit, welche robust gegen Störparameter, wie zum Beispiel die Zwischenkreisspannung, ist. Die Übertragungsfunktion ist weiterhin analytisch auflösbar, wenn die Schaltfrequenz $f_p$ und/oder den Tastgrad $D$ bekannt sind. Hierbei können die Schaltfrequenz $f_p$ und/oder der Tastgrad $D$ bestimmt werden, um einen gewünschten gemittelten Wert des Aus-gangsstroms $\overline{I}_{out}$ zu erhalten. Insbesondere im Unterschied zu M. Heidinger et al., s.o. ist hierzu jedoch die Kenntnis der Kondensatorspannung $U_C$ nicht erforderlich, die dort zudem mittels eines iterativen Algorithmus bestimmt werden muss.

Beispielsweise kann durch Einstellen des Tastgrades $D$ die Schaltfrequenz $f_p$ ermittelt werden, um den gewünschten gemittelten Wert des Ausgangsstroms $\overline{I}_{out}$ zu erhalten. Bevorzugt kann hier ein analytisches Verfahren verwendet werden; alternativ oder zusätzlich ist jedoch ein Einsatz eines numerischen

Verfahrens möglich. Durch eine Übertragungsfunktion, die hinreichend genau ist, kann somit eine Steuerung des Serien-Resonanz-Wandlers vorgenommen werden, bei welcher auf einen Regelkreis oder eine Regelschleife verzichtet werden kann. Hierbei kann die Übertragungsfunktion nach dem Tastgrad D oder nach der Schaltfrequenz $f_p$ aufgelöst werden. Alternativ oder zusätzlich ist es jedoch möglich, die Übertragungsfunktion mittels eines numerischen Verfahrens zu lösen, wobei dann nicht-analytisch lösbare Gleichungen gelöst werden, wozu jedoch eine höhere Rechenleistung benötigt wird. Zur weiteren Steigerung der Genauigkeit und zur Erhöhung der Dynamik und Stabilität des Serien-Resonanz-Wandlers kann jedoch ein Regelkreis oder eine Regelschleife eingesetzt werden.

Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist jedoch nicht auf die Ausführungsbeispiele beschränkt. Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente. Im Einzelnen zeigen:

Figur 1     schematische Darstellungen von bevorzugten Ausführungsformen eines Serien-Resonanz-Wandlers;

Figur 2     eine schematische Darstellung eines zeitlichen Verlaufs von ausgewählten Spannungen und Strömen in einer bevorzugten Ausführungsform eines Verfahrens zur Steuerung des Serien-Resonanz-Wandlers;

Figur 3     eine Darstellung von Messergebnissen für den gemittelten Wert eines Ausgangsstroms $\overline{I}_{out}$ als Funktion der Ausgangsspannung $U_{out}$ der Primärseite (Figur 3a) und der Zwischenkreisspannung $U_{dc}$ (Figur 3b);

Figur 4     eine Darstellung von Messergebnissen zum zeitlichen Verlauf der Zwischenkreisspannung $U_{dc}$ und des momentanen Ausgangsstroms $I_{out}$;

Figur 5     eine schematische Darstellung einer weiteren bevorzugten Ausführungsform des Serien-Resonanz-Wandlers, ergänzt um eine Schaltung zur Leistungsfaktor-Korrektur;

Figur 6     eine Darstellung einer Schaltung, die zur Simulation von Ausführungsformen des Serien-Resonanz-Wandlers verwendet wurde; und

Figur 7     eine Darstellung von verschiedenen Kurvenverläufen, die in der Simulation gemäß Figur 6 erhalten wurden.

Beschreibung der Ausführungsbeispiele

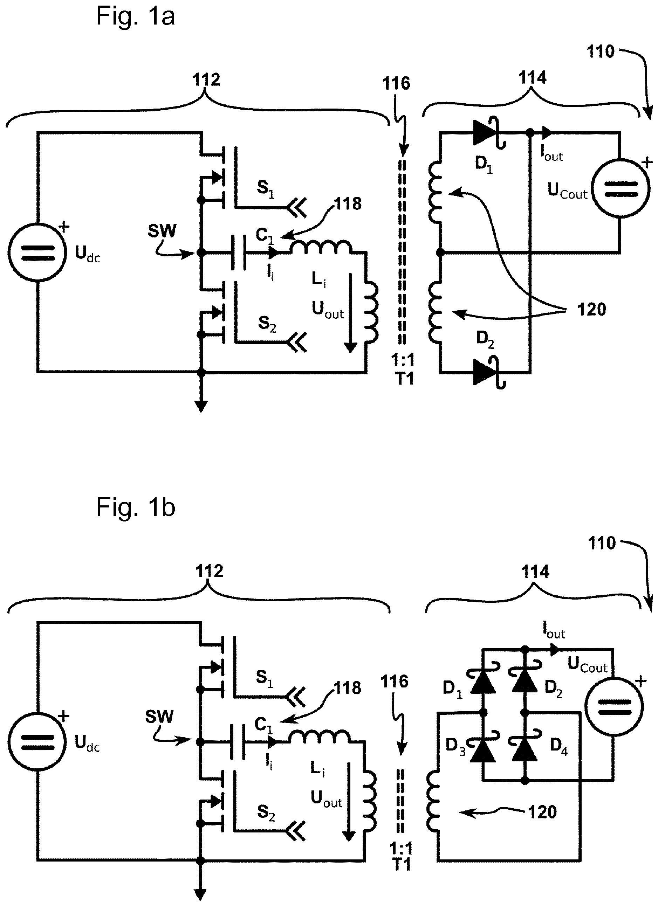

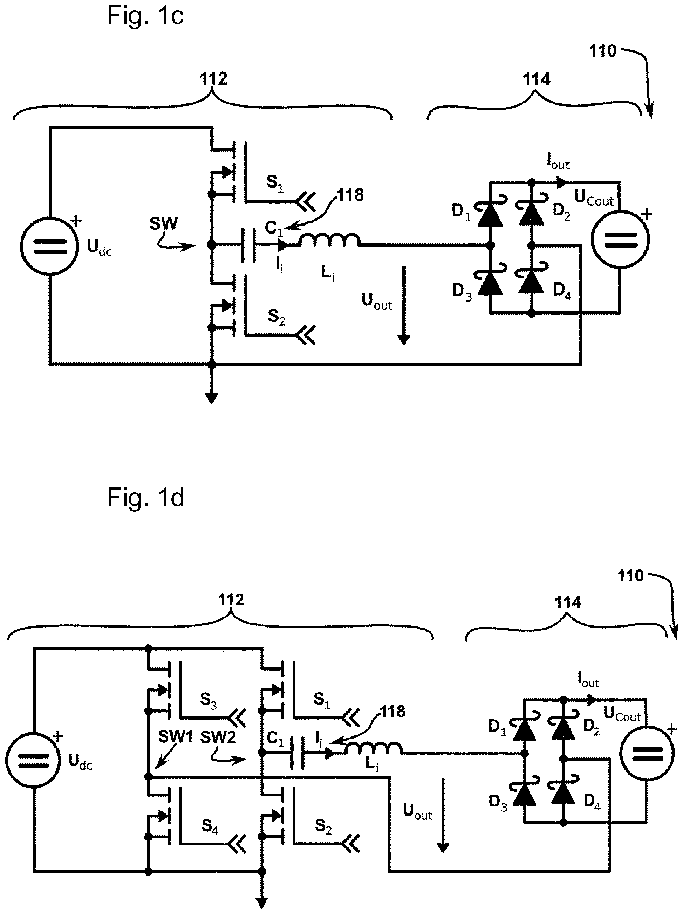

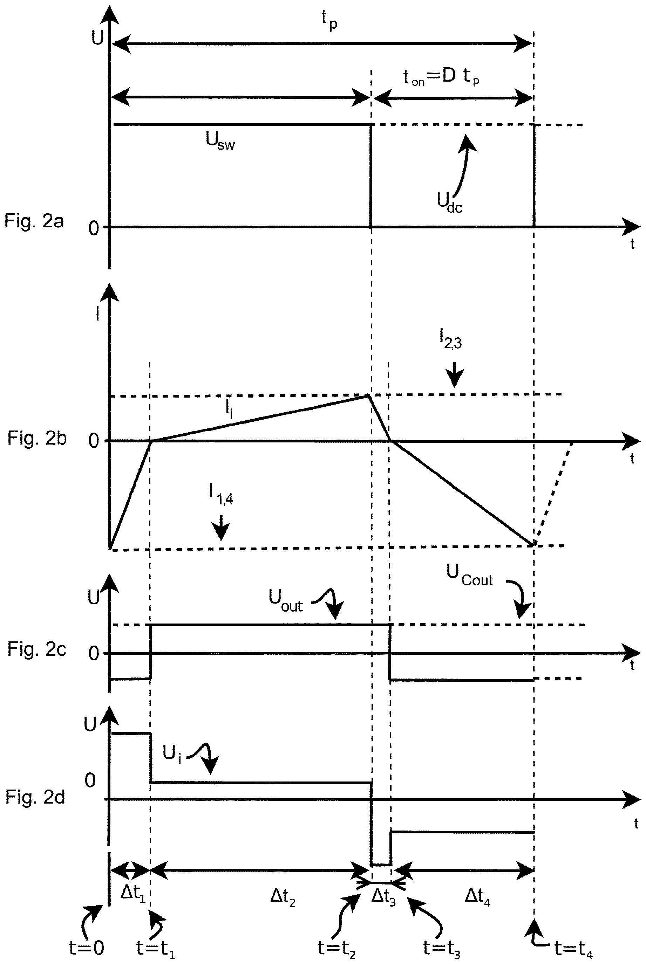

Figur 1 zeigt schematische Darstellungen von bevorzugten Ausführungsformen eines Serien-Resonanz-Wandlers 110. Weitere Ausführungsformen sind jedoch möglich. Der Serien-Resonanz-Wandler 110 weist einen Primärkreis 112 und einen Sekundärkreis 114 auf, wobei der Primärkreis 112 und der Sekundärkreis 114 in den Ausführungsformen gemäß den Figuren 1a und 1b durch einen Transformator T1 116 galvanisch voneinander getrennt sind. Der Einsatz des Transformators 116 ermöglicht ein Austausch von elektrischer Leistung zwischen dem Primärkreis 112 und dem Sekundärkreis 114 mittels induktiver Kopplung. In der Darstellung des Serien-Resonanz-Wandlers 110 gemäß den Figuren 1a und 1b ist der Transformator 116 als 1:1-Transformator ausgeführt; andere Arten der Ausführung des Transformators 116 sind jedoch möglich. Figur 1d zeigt eine Ausführung des Serien-Resonanz-Wandlers 110, in welcher einer Vollbrücke im Primärkreis 112 eingesetzt wird, wobei die Vollbrücke hierbei einen ersten Schaltknoten SW1 und einen zweiten Schaltknoten SW2 aufweist. Es wird darauf hingewiesen, dass der Transformator 116 eine inhärente, konstruktionsbedingte Magnetisierungsinduktivität aufweist. Da die Magnetisierungsinduktivität jedoch keinen Einfluss auf den Ausgangsstrom $\overline{I}_{out}$ hat, wurde zur Vereinfachung in den Figuren 1 und 2 die Magnetisierungsinduktivität vernachlässigt.

An dem Primärkreis 112 liegt eine Zwischenkreisspannung $U_{dc}$ (engl. *DC link voltage*) an, welche meist als Gleichspannung bereitgestellt wird. Um eine Ausgangsspannung $U_{out}$ des Primärkreises 112 in Form einer Wechselspannung zu erzeugen, umfasst der Primärkreis 112 eine Halbbrücke, welche an einen Serien-Resonanz-Schwingkreis 118 angeschlossen ist, der in den Ausführungsbeispielen gemäß Figur 1 eine Kapazität $C_1$ in Form eines Kondensators und eine Induktivität $L_i$ in Form einer Spule, welche in Reihe geschaltet sind, umfasst. Hierbei fließt ein Strom $I_i$ durch die Kapazität $C_1$. Andere Ausführungen des Schwingkreises sind jedoch denkbar. Aus dieser Anordnung der Kapazität $C_1$ und der Induktivität $L_i$ in Reihe kann eine zugehörige Resonanzfrequenz $f_R$ des Schwingkreises ermittelt werden, welche durch folgende Gleichung (2) beschrieben werden kann:

$$f_R = \frac{1}{2\pi\sqrt{L_i C_1}} \qquad (2)$$

Wie bereits erwähnt, kann der Primärkreis 112 über eine Halbbrücke verfügen, welche bevorzugt zwei Schalter $S_1$, $S_2$ umfasst, welche dazu eingesetzt werden können, eine unipolare Rechteckspannung an einem Schaltknoten (engl. *switch node,* SW) zu generieren. Hierzu kann während einer vorgegebenen Zeitperiode jeweils nur einer der beiden Schalter auf "AN" gestellt werden, während der andere der beiden Schalter während derselben Zeitperiode auf "AUS" gestellt ist. Die beiden Schalter $S_1$, $S_2$ können, wie in den Ausführungsbeispielen gemäß Figur 1 schematisch dargestellt, hierbei als Metall-Oxid-Halbleiter-Feldeffekttransistor (engl. *metal-oxide-semiconductor field-effect transistor,* MOSFET) ausgeführt sein; andere Arten der Ausführung sind jedoch möglich.

Insbesondere in dieser Ausführung lassen sich die beiden Schalter $S_1$, $S_2$, wie schematisch durch die Pfeile "<<" dargestellt, durch einen Mikroprozessor oder Mikrokontroller (nicht dargestellt) oder mittels eines auf dem Mikroprozessor oder Mikrokontroller ausgeführtes Computerprogramm schalten. Es ist jedoch auch möglich, die beiden Schalter $S_1$, $S_2$ auf andere Weise zu schalten. Wie in Figur 2 näher dargestellt, kann während einer ersten Zeitperiode, in dem der erste Schalter $S_1$ auf "AN" gestellt ist, eine Schaltspannung $U_{SW} > 0$ an dem Schaltknoten SW anliegen. Wie weiterhin in Figur 2 näher dargestellt, kann dagegen während einer zweiten Zeitperiode, in dem der zweite Schalter $S_2$ auf "AN" gestellt ist, die Schaltspannung $U_{SW} = 0$ an dem Schaltknoten SW betragen. Hierdurch kann eine Schaltperiode $t_p$ eingestellt werden, welche als Summe der ersten Zeitperiode und der zweiten Zeitperiode angegeben werden kann. Weiterhin kann ein Tastgrad oder Tastverhältnis D (engl. *duty cycle*) eingestellt werden. Wie oben bereits erwähnt, ist der Tastgrad D dadurch definiert, dass die Zeit $D \cdot t_p$ eine Zeitdauer angibt, während welcher die Schaltspannung $U_{SW}$ = 0 beträgt.

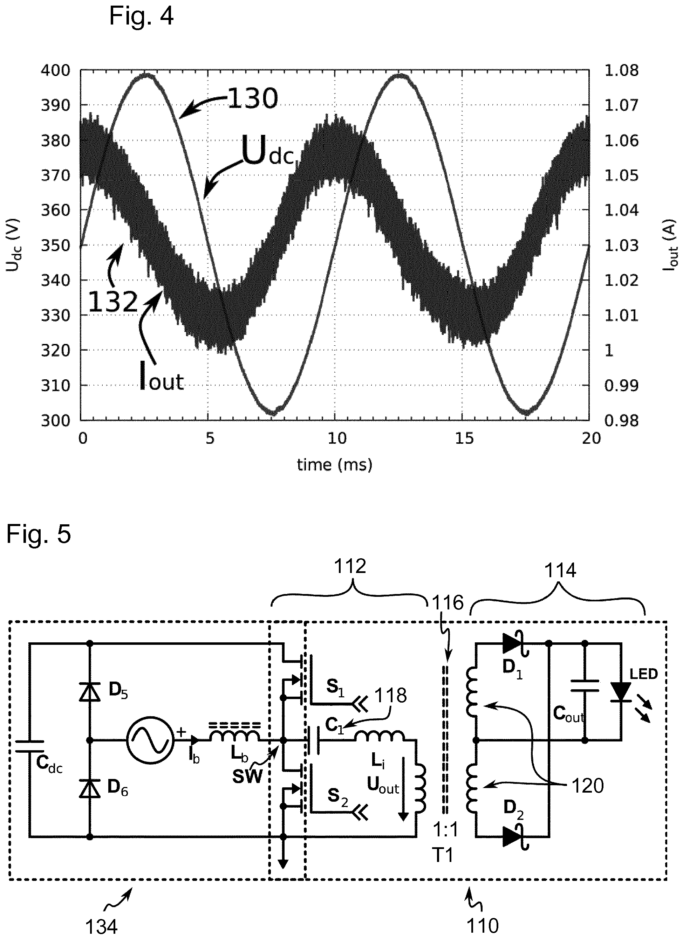

In den Ausführungsbeispielen gemäß Figur 1 wird in dem Sekundärkreis 114 eine Ausgangsspannung $U_{Cout}$ (engl. *output voltage*) angenommen, welche einen Ausgangsstrom $\bar{I}_{out}$ (engl. *output current*) bereitstellt, die gemäß dem vorliegenden Verfahren zur Steuerung des Serien-Resonanz-Wandlers 110 verwendet wird. Die Ausgangsspannung $U_{Cout}$ kann sich hierbei insbesondere aus der an dem Sekundärkreis 114 anliegenden Last ergeben, wobei die Ausgangsspannung $U_{cout}$ durch einen Ausgangskondensator $C_{out}$ (in Figur 5 beispielhaft dargestellt) gepuffert sein kann. Insbesondere für die vereinfachte Berechnung der in Figur 1 beispielhaft dargestellten Serien-Resonanz-Wandler 110 wurde der Ausgangskondensator $C_{out}$ als Spannungsquelle angenähert. Andere Ausgestaltungen sind jedoch möglich.

Die Ausführung gemäß Figur 1a zeigt zwei Sekundärwindungen 120 des Transformators 116, an welchen eine Sekundärkreisspannung $U_{sec}$ abfällt, sowie zwei Dioden $D_3$, $D_4$, die als Sekundärgleichrichter dienen. In der Ausführung gemäß Figur 1b ist dagegen nur eine Sekundärwindung 120 des Transformators 116, an denen die Sekundärkreisspannung $U_{sec}$ abfällt, dargestellt sowie vier Dioden $D_1$, $D_2$, $D_3$, $D_4$, die als der Sekundärgleichrichter eingesetzt werden. In der Ausführung gemäß Figur 1c entfällt der Transformator 116 und der Serien-Resonanz-Schwingkreis 118 wird direkt mit dem Sekundärgleichrichter, welcher die vier Dioden $D_1$, $D_2$, $D_3$, $D_4$ umfasst, verbunden. In der Ausführung gemäß Figur 1d wird die oben beschriebene Vollbrücke eingesetzt, an welche der Serien-Resonanz-Schwingkreis 118 angeschlossen ist. Wie schematisch dargestellt, kann in der Ausführung gemäß Figur 1d auf den Transformator verzichtet werden; alternativ kann jedoch ein Transformator eingesetzt werden (nicht dargestellt).

Figur 2 zeigt eine schematische Darstellung eines zeitlichen Verlaufs von ausgewählten Spannungen und Strömen in einer bevorzugten Ausführungsform des vorgeschlagenen Verfahrens zur Steuerung des Serien-Resonanz-Wandlers 110 über genau eine Schaltperiode $t_p$, welche hier vorzugsweise im Bereich von einigen µs liegt. Wie in Figur 2 schematisch dargestellt, umfasst die genau eine Schaltperiode $t_p$ hierbei die einzelnen Zeiträume $\Delta t_1$, $\Delta t_2$, $\Delta t_3$ und $\Delta t_4$, die in der angegebenen Reihenfolge aufeinander folgend ausgeführt werden. Hierbei werden die Verfahrensschritte a) bis d) in jeweils einem der Zeiträume $\Delta t_1$, $\Delta t_2$, $\Delta t_3$ und $\Delta t_4$, jeweils in der angegebenen Reihenfolge, ausgeführt. Damit kann für den Ausgangsstrom $\bar{I}_{out}$ des Sekundärkreises 114 ein gemittelter Wert über die genau eine Schaltperiode $t_p$ gemäß der folgenden Gleichung (3) angegeben werden:

$$\bar{I}_{out} = \frac{1}{t_p} \left( \int_{t=0}^{t=t_1} I_{n=1}(t)dt + \int_{t=t_1}^{t=t_2} I_{n=2}(t - t_1)dt + \int_{t=t_2}^{t=t_3} I_{n=3}(t - t_2)dt + \int_{t=t_3}^{t=t_4} I_{n=4}(t - t_3)dt \right) \quad (3)$$

Wie in Figur 2a dargestellt, liegt während der Zeiträume $\Delta t_1$, $\Delta t_2$, d.h. während der Ausführung der Verfahrensschritte a) und b), die Schaltspannung $U_{SW} > 0$ an dem Schaltknoten SW an; dagegen beträgt die Schaltspannung $U_{SW}$ = 0 an dem Schaltknoten SW während der Zeiträume $\Delta t_3$, $\Delta t_4$, d.h. während der Ausführung der Verfahrensschritte c) und d).

Wie oben bereits erwähnt, zeigt der momentane Ausgangsstrom $\bar{I}_{out}$ des Serien-Resonanz-Wandlers 110 üblicherweise einen sinusförmigen Verlauf. In dem Ausführungsbeispiel gemäß Figur 2 erfolgt jedoch der Betrieb des Serien-Resonanz-Wandlers 110 bei einer Frequenz oberhalb der Resonanzfrequenz $f_R$, bevorzugt bei einer Frequenz oberhalb dem 1,5-fachen, besonders bevorzugt bei dem Doppelten, der Resonanzfrequenz $f_R$ so dass eine erste Taylor-Näherung des sinusförmigen Verlaufs verwendet werden kann.

Eine an der Kapazität $C_1$ des Serien-Resonanz-Schwingkreises 118 anliegende Kondensatorspannung $U_C$ kann eine zeitliche Änderung gemäß der folgenden Gleichung (4) erfahren:

$$\frac{d}{dt} U_{C1} = \frac{I_i}{C_1}, \qquad (4)$$

in welche der Strom $I_i$ durch die Kapazität $C_1$ mit einfließt. Um die Änderung der Kondensatorspannung $U_C$ möglichst gering zu halten, sollte folglich die Kapazität $C_1$ möglichst groß gewählt werden.

Figur 2b zeigt den zeitlichen Verlauf des momentanen Stroms $I_i$ abzüglich des Magnetisierungsstroms $I_m$ durch die Kapazität $C_1$. Hierbei können die Werte für den Strom $I_n$ während jedem der Zeiträume $\Delta t_1$, $\Delta t_2$, $\Delta t_3$ und $\Delta t_4$ durch die folgende Gleichung (5) beschrieben werden:

$$I_n(t) = s_n \frac{U_{SW,n} - U_C - U_{out,n}}{L_i}, \qquad (5)$$

wobei $s_n = +1$ für die Zeiträume $\Delta t_1$, $\Delta t_2$ gilt, während $s_n = -1$ für die Zeiträume $\Delta t_3$, $\Delta t_4$ gilt.

Aus Gleichung (5) ergibt sich, dass die Werte für den Strom $I_n$ für die Zeiträume $\Delta t_n$ mit $n = 1, 2, 3$ *oder* 4 durch die Kapazität $C_1$ durch die folgenden drei Spannungen Schaltspannung $U_{SW}$, Kondensatorspannung $U_C$ und Ausgangsspannung $U_{out}$ des Primärkreises 112 bestimmt wird. Der zeitliche Verlauf der Schaltspannung $U_{SW}$ kann hierbei der Darstellung in Figur 2a entnommen werden.

Damit kann der zeitliche Verlauf jedes Strombeitrags während jedem der Zeiträume $\Delta t_1$, $\Delta t_2$, $\Delta t_3$ und $\Delta t_4$, jeweils gemäß Gleichung (6) angegeben werden:

$$\int_{t=0}^{t=t_n} I_n(t)\,dt = s_n \frac{U_{SW,n} - U_C - U_{out,n}}{2\,L_i}\, t_n^2 \qquad (6)$$

Für die an der Kapazität $C_1$ anliegende Kondensatorspannung $U_C$ kann angenommen werden, dass diese gemäß der folgenden Gleichung (7) beschrieben werden kann:

$$U_C = (1 - D) U_{dc} \qquad (7)$$

Mittels dieser Gleichung lassen sich die folgenden Zeitgleichungen (8) bis (11) ermitteln:

$$t_1 = \frac{(1-D)U_{dc} - U_{Cout}}{2\,U_{dc}}\, t_p \qquad (8)$$

$$t_2 = \frac{(1-D)U_{dc} + U_{Cout}}{2\,U_{dc}}\, t_p \qquad (9)$$

$$t_3 = \frac{D\,U_{dc} - U_{Cout}}{2\,U_{dc}}\, t_p \qquad (10)$$

$$t_4 = \frac{D\,U_{dc} + U_{Cout}}{2\,U_{dc}}\, t_p \qquad (11)$$

Figur 2c zeigt den zeitlichen Verlauf der nicht gleichgerichteten Ausgangsspannung des Transformators $U_{out}$ (durchgezogene Linie), welche durch den nachgeschalten Sekundärgleichrichter in die Ausgangsgleichspannung $U_{Cout}$ (gestrichelte Linie) umgewandelt wird.

Figur 2d zeigt hier den zeitlichen Verlauf der Spannung $U_i$ über die Induktivität $L_i$. Die zeitliche Ableitung der der Spannung $U_i$ über die Induktivität $L_i$ ergibt schließlich die zeitliche Änderung des Stroms $I_i$, welcher in Fig. 2b dargestellt ist.

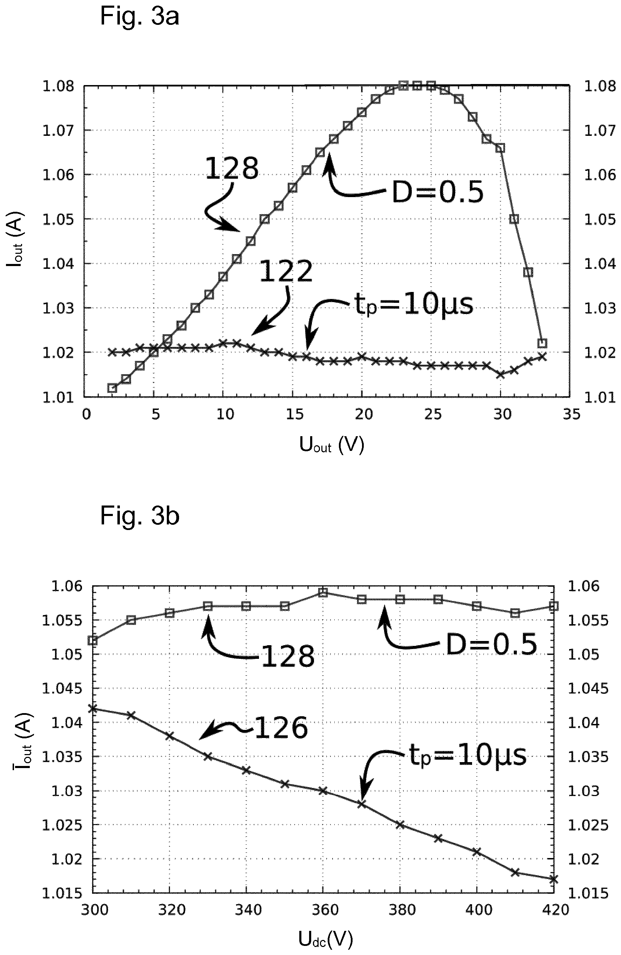

Figur 3a zeigt eine Darstellung von zwei Messkurven 122, 124, welche jeweils für den gemittelten Ausgangsstrom $\overline{I}_{out}$ als Funktion der Ausgangsspannung $U_{out}$ der Primärseite 112 des Serien-Resonanz-Wandlers 110 erhalten wurden. Hierbei wurde in einer Messkurve 122 die Schaltperiode $t_p$ = 10 $\mu s$ gesetzt, während der Tastgrad D variiert wurde. Im Gegensatz hierzu wurde in einer Messkurve 124 der Tastgrad D = 0,5 gesetzt, während die Schaltperiode variiert wurde. In den beiden Messkurven 122, 124 ist ein Auftreten eines Offset-Stroms erkennbar. Die Messkurve 122 gibt hierbei den gemittelten Ausgangsstrom $\overline{I}_{out}$ bei einer festgelegten Schaltfrequenz von 100 kHz wieder, während die Messkurve 124 den gemittelten Ausgangsstrom $\overline{I}_{out}$ in Ampere bei einem Tastgrad D von 0.5 widergibt. Während die Messkurve 122 einen nahezu konstanten Verlauf über den betrachteten Bereich der Ausgangsspannung $U_{out}$ der Primärseite 112 zeigt, ist in der Messkurve 124 eine Änderung des gemittelten Ausgangsstroms $\overline{I}_{out}$ um etwa 70 mA erkennbar.

Figur 3b zeigt eine Darstellung von zwei weiteren Messkurven 126, 128, welche jeweils für den gemittelten Wert des Ausgangsstroms $\overline{I}_{out}$ als Funktion der Zwischenkreisspannung $U_{dc}$ erhalten wurden. Hierbei wurde in der Messkurve 126 die Schaltperiode $t_p$ = 10 $\mu s$ gesetzt, während der Tastgrad D variiert wurde. Im Gegensatz hierzu wurde in der Messkurve 128 der Tastgrad D = 0,5 gesetzt, während die Schaltperiode variiert wurde. In den beiden weiteren Messkurven 126, 128 ist ebenfalls ein Auftreten eines Offset-Stroms erkennbar. Aus der Messkurve 126 ist erkennbar, dass der gemittelte Wert des Ausgangsstroms $\overline{I}_{out}$ bei einer Zunahme der Zwischenkreisspannung $U_{dc}$ abnimmt, wobei aus Figur 3b eine Änderung des gemittelten Ausgangsstroms $\overline{I}_{out}$ um etwa 70 mA erkennbar ist.

Figur 4 zeigt eine Darstellung von zwei weiteren Messkurven 130, 132, wobei die Messkurve 130 den zeitlichen Verlauf der Zwischenkreisspannung $U_{dc}$ und die Messkurve 132 den zeitlichen Verlauf des momentanen Ausgangsstroms $\overline{I}_{out}$ wiedergeben. Wie aus der Messkurve 130 hervorgeht, wird hierbei die Zwischenkreisspannung $U_{dc}$ um einen Wert von etwa 100 V variiert, während sich der momentane Ausgangsstrom $\overline{I}_{out}$ lediglich um etwa 6 % ändert. Eine derartig geringer Änderung des momentanen Ausgangsstroms $\overline{I}_{out}$ bei einer derart hohen Änderung der Zwischenkreisspannung $U_{dc}$ kann mit bekannten Verfahren zum Betrieb des Serien-Resonanz-Wandlers 110 nicht erreicht werden.

Figur 5 zeigt eine schematische Darstellung einer weiteren bevorzugten Ausführungsform des Serien-Resonanz-Wandlers 110, welcher um eine Schaltung 134 zur Leistungsfaktorkorrektur (engl. *power factor correction,* PFC) ergänzt wurde. In dieser Ausführungsform kann die Schaltung 134 zur Leistungsfaktorkorrektur an dem Schaltknoten SW als zusätzlicher Wandler (Konverter) hinzugefügt werden, welche sich derart modellieren lassen kann, dass hierbei sowohl die Schaltperiode $t_p$ als auch der Tastgrad D als Freiheitsgrade verwendet werden können. Die Schaltung 134 zur Leistungsfaktorkorrektur kann insbesondere dazu dienen, um einen quasi-sinusförmigen Netzaufnahmestrom zu erzeugen, während der Serien-Resonanz-Wandler 110 dazu eingerichtet ist, um die Zwischenkreisspannung $U_{dc}$ in die Ausgangsspannung $U_{Cout}$ zu wandeln.

In Figur 5 wurde die für die vereinfachte Berechnung der in Figur 1 dargestellten Serien-Resonanz-Wandler 110 verwendete Näherung, den Ausgangskondensator $C_{out}$ als Spannungsquelle anzunähern, nicht ausgeführt. Vielmehr dient die in Figur 5 an dem Ausgangskondensator $C_{out}$ anliegende Ausgangsspannung $U_{cout}$ beispielhaft dazu, um eine Leuchtdiode (engl. *light-emitting diode,* LED) als Last zu betreiben. Andere Arten von Lasten sind jedoch möglich.

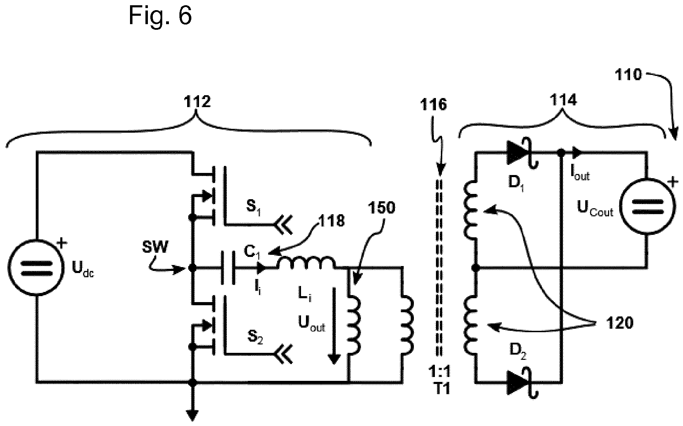

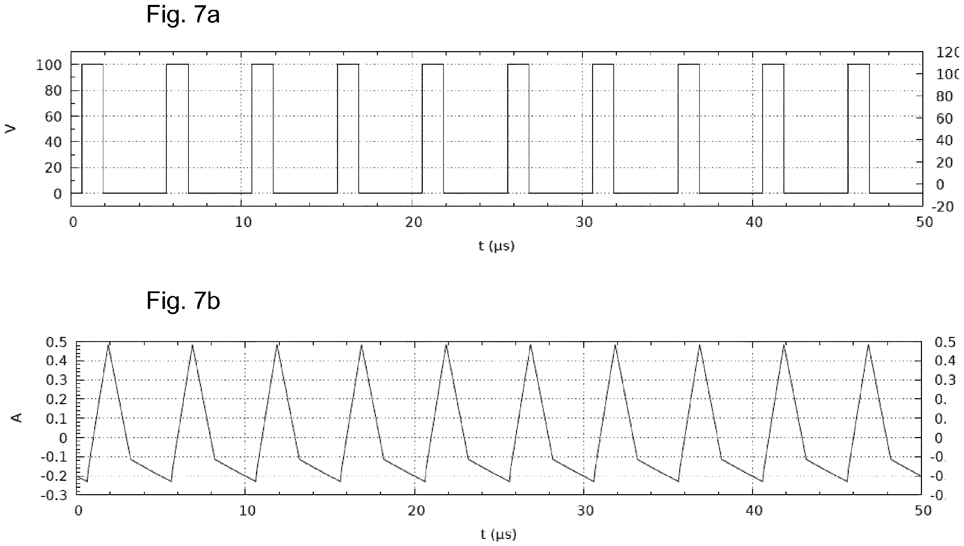

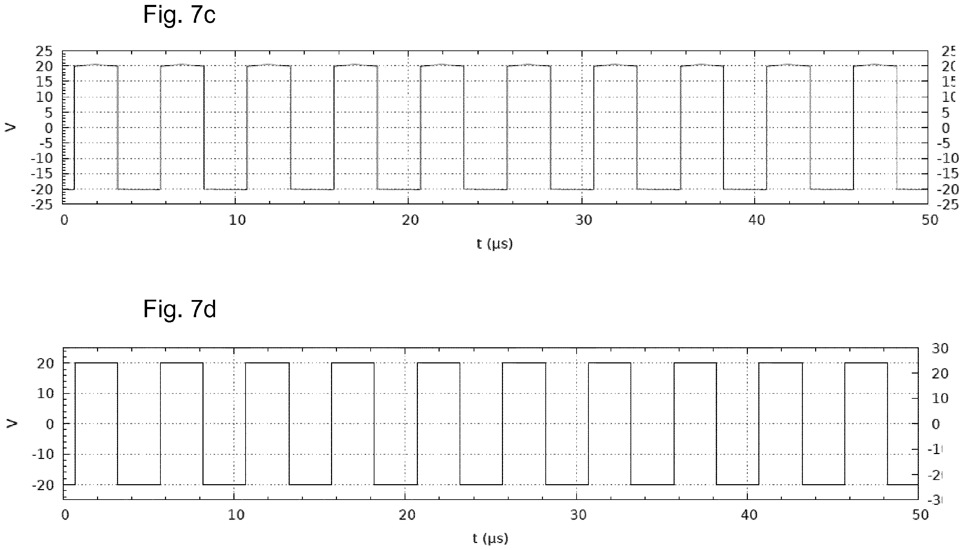

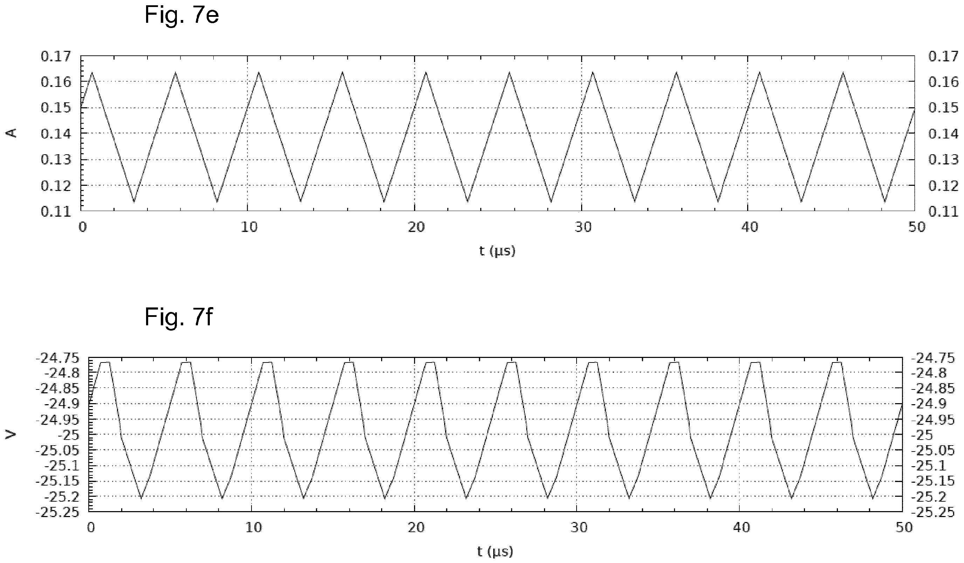

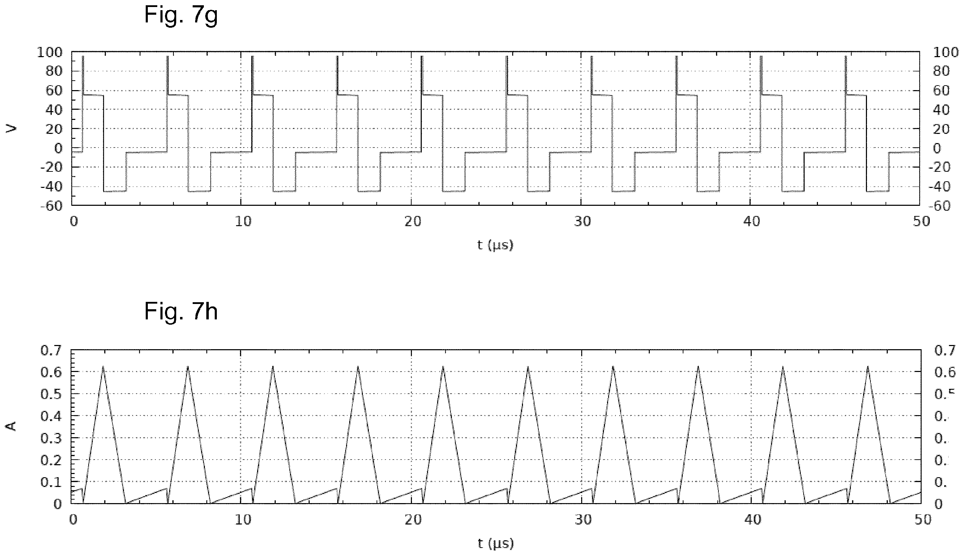

Figur 6 zeigt eine schematische Darstellung einer Schaltung, die zur Simulation der bevorzugten Ausführungsform des Serien-Resonanz-Wandlers 110 gemäß Figur 1a verwendet wurde, wobei eine inhärente Magnetisierungsinduktivität 136 des Transformators 116 in der Simulation zusätzlich berücksichtigt wurde. Kurvenverläufe, die in der Simulation unter Verwendung der Schaltung gemäß Figur 6 erhalten wurden, sind in Figur 7 dargestellt. In der Simulation wird der Primärkreis 112, welche die beiden Schalter $S_1$, $S_2$ umfasst, mittels eines asymmetrischen Tastgrads D angesteuert. Die Parameter der durchgeführten Simulation lauten wie folgt:

- Tastgrad D = 0,25;
- Eingangsspannung $U_{dc}$ = 100 V;
- Lastspannung: 20 V;
- Trafo-Windungsverhältnis 1:1;
- Schaltfrequenz der Halbbrücke: 200 kHz;
- Streuinduktivität 100 $\mu$H; und
- Magnetisierungsinduktivität 1mH.

Figur 7a zeigt einen zeitlichen Verlauf 138 der Spannung des Primärkreises 112 mit Bezug zur Erde. Der zeitliche Verlauf 138 der Spannung des Primärkreises 112 stellt eine RechteckSpannung dar, welche als minimalen Wert 0 V und als maximalen Wert die Zwischenkreisspannung $U_{dc}$ aufweist. In der Simulation wurde als Wert für die Zwischenkreisspannung $U_{dc}$ = 100 V gewählt. Der Primärkreis 112 wird in der Simulation mit einem geringen Tastgrad D = 0,25 angesteuert.

Figur 7b zeigt einen zeitlichen Verlauf 140 des Stroms der Induktivität $L_i$. Der zeitliche Verlauf 140 des Stroms der Induktivität $L_i$ kann als dreiecksförmig beschrieben werden, Zusätzlich ist der Stroms der Induktivität $L_i$ um einen von der Magnetisierungsinduktivität herrührenden Magnetisierungsstrom verschoben. Dieser trägt jedoch nicht zum Ausgangsstrom bei, und wurde daher in Figur 2b vernachlässigt. Aufgrund des geringen Tastgrads D = 0,25 kann während der positiven Periode ein Strom mit einem absolut sehr hoher Wert, dagegen während der negativen Periode ein Strom mit einem absolut sehr niedrigen Wert auftreten. Darüber hinaus kann der Transformator 116, wie weiterhin aus Figur 7b hervorgeht, eine integrierte Streuinduktivität oder eine externe Streuinduktivität aufweisen.

Figur 7c zeigt einen zeitlichen Verlauf 142 der am Transformator 116 anliegenden Primärspannung, während in Figur 7d ein zeitlicher Verlauf 144 der am Transformator 116 anliegenden Sekundärspannung dargestellt ist. Wie aus den Figuren 7c und 7d hervorgeht, konnte die Annahme, dass die positive Amplitude und die negative Amplitude der Ausgangsspannung $U_{cout}$ unabhängig von dem Tastgrad D gleich sind, bestätigt werden, da die Amplituden der Ausgangsspannung $U_{cout}$ jeweils durch den sich in dem Sekundärkreis 114 befindlichen Sekundärgleichrichter gegeben sind.

Figur 7e zeigt einen zeitlichen Verlauf 146 des Magnetisierungsstroms. Wie aus Figur 7d hervorgeht, sind die Spannungszeitflächen der Induktivität $L_i$ und des Transformators 116 gemäß der Simulation stets gleich groß, insbesondere da, wie Figur 7e darstellt, ein Hauptstrom durch die Induktivität $L_i$ nicht divergiert. Wie aus Figur 7d entnommen werden kann weist die am Transformator 116 anliegende Spannung stets einen Tastgrad D = 0,5 auf, auch wenn, wie aus Figur 7a hervorgeht, der anregende Tastgrad D stark asymmetrisch ist. Daher sättigt der Transformator 116 bei der gleichen Ausgangsspannung $U_{Cout}$ nicht. Darüber hinaus sorgt die an der Kapazität $C_1$ anliegende Kondensatorspannung $U_C$, deren zeitlicher Verlauf 148 in Figur 7f dargestellt ist, für einen Gleichspannungs-Offset, so dass der Transformator 116 einem Wechselstrom ausgesetzt wird. Der Transformator 116 kann durch die Kapazität $C_1$ keinem Gleichstrom ausgesetzt werden.

Die Spannungen, welche an der Induktivität $L_i$ anliegen, sind unterschiedlich hoch, wie aus der Figur 7g hervorgeht, in welcher ein zeitlicher Verlauf 150 der Ausgangsspannung $U_{Cout}$ am Transformator 116 dargestellt ist. Allerdings sind hierbei die Spannungs-Zeitflächen deckungsgleich. Mit steigendem Tastgrad D steigt die Spannungsdifferenz der Spitzenwerte. Hierzu wurde in der Simulation die Spannung für jeden der der Zeiträume $\Delta t_1$, $\Delta t_2$, $\Delta t_3$ und $\Delta t_4$ individuell betrachtet, aus denen dann die Spulenströme berechnet wurden. Auf Basis der Induktivität $L_i$ wurde dann ein gemittelter Wert für den Ausgangsstrom $\overline{I}_{out}$ bestimmt. Der Wert der Induktivität $L_i$ ist unveränderlich und kann daher in Gleichung (1) verwendet werden. Wie bereits erwähnt, ergibt sich aus Figur 7g, dass die Spannungs-Zeitflächen der Ausgangsspannung $U_{Cout}$ am Transformator 116 gleich groß sind. Dennoch ist bei korrekter Auslegung keine Sättigung des Transformators 116 zu beobachten, da, wie oben dargelegt, die am Transformator 116 anliegende Spannung stets einen Tastgrad D = 0,5 aufweist.

Figur 7h zeigt einen zeitlichen Verlauf 152 des Ausgangsstroms des Serien-Resonanz-Wandlers 110. Wenn am Primärkreis 112 die Zwischenkreisspannung $U_{dc}$ anliegt, kann ein sehr hoher Ausgangsstrom beobachtet werden. Weist dagegen der Primärkreis 112 Null Volt auf, kann ein sehr kleiner Ausgangsstrom beobachtet werden. Aus Figur 7h kann darüber hinaus entnommen werden, dass der primärseitige Magnetisierungsstroms $I_m$ keinen Einfluss auf den Ausgangsstrom $\overline{I}_{out}$ hat.

Bezugszeichenliste

| | |
|---|---|
| 110 | Serien-Resonanz-Wandler |
| 112 | Primärkreis |
| 114 | Sekundärkreis |
| 116 | Transformator |
| 118 | Serien-Resonanz-Schwingkreis |
| 120 | Sekundärwindung |
| 122 bis 132 | Messkurve |

134        Schaltung zur Leistungsfaktorkorrektur

136        inhärente Magnetisierungsinduktivität

138 bis 152    zeitlicher Verlauf

**Patentansprüche**

1. Verfahren zur Steuerung eines Serien-Resonanz-Wandlers (110), wobei der Serien-Resonanz-Wandler (110) einen Primärkreis (112) und einen Sekundärkreis (114) aufweist, wobei der Primärkreis (112) oder der Sekundärkreis (114) einen Serien-Resonanz-Schwingkreis (118) aufweist, wobei der Serien-Resonanz-Schwingkreis (118) mindestens eine Kapazität $C_1$ und mindestens eine Induktivität $L_i$ umfasst, wobei an dem Primärkreis (112) eine Zwischenkreisspannung $U_{dc}$ anliegt, und wobei der Sekundärkreis (114) einen mittleren Ausgangsstrom $\bar{I}_{out}$ bereitstellt, **dadurch gekennzeichnet, dass** die Steuerung des Serien-Resonanz-Wandlers (110) dadurch erfolgt, dass ein gemittelter Wert für den Ausgangsstrom $\bar{I}_{out}$ mittels einer Übertragungsfunktion eingestellt wird, wobei die Übertragungsfunktion eine Funktion der Zwischenkreisspannung $U_{dc}$, der Ausgangsspannung $U_{Cout}$, der Induktivität $L_i$, einer Schaltperiode $t_p$ und eines Tastgrades $D$ ist, wobei zumindest die Schaltperiode $t_p$ und/oder der Tastgrad $D$ eingestellt werden.

2. Verfahren nach dem vorangehenden Anspruch, wobei die Übertragungsfunktion ferner eine Funktion der mindestens einen Kapazität $C_1$ des Serien-Resonanz-Schwingkreises (118) ist.

3. Verfahren nach einem der vorangehenden Ansprüche, wobei der Serien-Resonanz-Wandler (110) bei einer Frequenz oberhalb einer Resonanzfrequenz $f_R$ betrieben wird, wobei sich die Resonanzfrequenz aus der mindestens einen Kapazität $C_1$ und der mindestens einen Induktivität $L_i$ in dem Serien-Resonanz-Schwingkreis (118) ergibt.

4. Verfahren nach einem der vorangehenden Ansprüche, wobei der Primärkreis (112) und der Sekundärkreis (114) durch einen Transformator (116) galvanisch voneinander getrennt sind.

5. Verfahren nach einem der vorangehenden Ansprüche, wobei die Übertragungsfunktion eine analytisch lösbare Funktion ist.

6. Verfahren nach einem der vorangehenden Ansprüche, wobei der gemittelte Wert für den Ausgangsstrom $\bar{I}_{out}$ mittels der Übertragungsfunktion

$$\bar{I}_{out} = \frac{D(1-D)\,U_{dc}^2 - U_{Cout}^2}{4\,L_i\,U_{dc}} \cdot t_p \qquad (1)$$

bestimmt wird.

7. Verfahren nach einem der vorangehenden Ansprüche, wobei der Tastgrad $D$ auf 0,1 bis 0,9 eingestellt wird.

8. Verfahren nach einem der vorangehenden Ansprüche, wobei die Schaltperiode $t_p$ auf 0.01 µs bis 100 ms eingestellt wird.

9. Verfahren nach einem der vorangehenden Ansprüche, wobei die Schaltperiode $t_p$ und der Tastgrad $D$ durch Betätigung von in dem Primärkreis (112) vorhandenen Schaltern $S_1$, $S_2$ unabhängig voneinander eingestellt werden.

10. Verfahren nach einem der vorangehenden Ansprüche, wobei die Schaltperiode $t_p$ und der Tastgrad $D$ mittels eines numerischen Verfahrens bestimmt werden.

11. Verfahren nach einem der vorangehenden Ansprüche, wobei der Primärkreis (112) mindestens eine Halbbrücke aufweist, wobei in der Halbbrücke zu einem Zeitpunkt die Zwischenkreisspannung $U_{dc}$ oder ein Nullpotential an einen Schaltknoten SW angelegt wird.

**EP 3 857 696 B1**

**12.** Verfahren nach einem der vorangehenden Ansprüche, wobei der Primärkreis (112) mindestens eine Vollbrücke aufweist, wobei in der Vollbrücke zu einem Zeitpunkt die Zwischenkreisspannung $U_{dc}$ oder ein Nullpotential an einem ersten Schaltknoten SW1 und an einem zweiten Schaltknoten SW2 angelegt wird.

**13.** Verfahren nach Anspruch 11, wobei innerhalb einer einzigen Schaltperiode $t_p$ die folgenden Schritte durchgeführt werden:

a) Einschalten der in dem Primärkreis (112) angeordneten Halbbrücke, wodurch ein Strom $I_i$ durch die Induktivität $L_i$ zeitlich zunimmt, bis ein Nulldurchgang für den Strom $I_i$ auftritt;
b) weitere zeitliche Zunahme des Strom $I_i$, bis ein Abschalten der in dem Primärkreis (112) angeordneten Halbbrücke des Serien-Resonanz-Schwingkreises (118) erfolgt;
c) zeitliche Abnahme des Stroms $I_i$, bis ein Nulldurchgang für den Strom $I_i$ auftritt; und
d) weitere zeitliche Abnahme des Stroms $I_i$.

**14.** Verfahren nach einem der Ansprüche 11 oder 13, wobei eine Schaltung (134) zur Leistungsfaktorkorrektur an den Schaltknoten SW angeschlossen wird.

**15.** Verfahren nach einem der vorangehenden Ansprüche, wobei der Serien-Resonanz-Wandler (110) im Hinblick auf einen möglichst geringen Ausgangsspannungsripple oder auf eine möglichst geringe Verlustleistung optimiert wird.

**16.** Computerprogramm, welches dazu eingerichtet ist, die Schritte des Verfahrens nach Anspruch 13 durchzuführen.

**Claims**

**1.** Method for controlling a series resonant converter (110), the series resonant converter (110) comprising a primary circuit (112) and a secondary circuit (114), the primary circuit (112) or the secondary circuit (114) comprising a series resonant oscillating circuit (118), the series resonant oscillating circuit (118) comprising at least one capacitance $C_1$ and at least one inductance $L_i$, a link voltage $U_{dc}$ being applied to the primary circuit (112), and the secondary circuit (114) providing an average output current $\overline{I}_{out}$, **characterized in that** the control of the series resonant converter (110) is carried out by adjusting an averaged value of the output current $\overline{I}_{out}$ by using a transfer function, the transfer function being a function of the link voltage $U_{dc}$, the output voltage $U_{Cout}$, the inductance $L_i$, a switching period $t_p$ and a duty cycle $D$, at least the switching period $t_p$ and/or the duty cycle $D$ being adjusted.

**2.** Method according to the preceding claim, wherein the transfer function is furthermore a function of the at least one capacitance $C_1$ of the series resonant oscillating circuit (118).

**3.** Method according to either of the preceding claims, wherein the series resonant converter (110) is operated at a frequency above a resonant frequency $f_R$, the resonant frequency being given by the at least one capacitance $C_1$ and the at least one inductance $L_i$ in the series resonant oscillating circuit (118).

**4.** Method according to one of the preceding claims, wherein the primary circuit (112) and the secondary circuit (114) are DC-isolated from one another by a transformer (116).

**5.** Method according to one of the preceding claims, wherein the transfer function is an analytically soluble function.

**6.** Method according to one of the preceding claims, wherein the averaged value of the output current $\overline{I}_{out}$ is determined by using the transfer function

$$\overline{I}_{out} = \frac{D(1-D)\,U_{dc}^2 - U_{Cout}^2}{4\,L_i\,U_{dc}} \cdot t_p \,. \qquad (1)\,.$$

**7.** Method according to one of the preceding claims, wherein the duty cycle **D** is adjusted to from 0.1 to 0.9.

**8.** Method according to one of the preceding claims, wherein the switching period $t_p$ is adjusted to from 0.01 µs to 100 ms.

14

9. Method according to one of the preceding claims, wherein the switching period $t_p$ and the duty cycle $D$ are adjusted independently of one another by actuating switches $S_1, S_2$ present in the primary circuit (112).

10. Method according to one of the preceding claims, wherein the switching period $t_p$ and the duty cycle $D$ are determined by using a numerical method.

11. Method according to one of the preceding claims, wherein the primary circuit (112) comprises at least one half bridge, the link voltage $U_{dc}$ or a zero potential being applied to a switch node SW at an instant in the half bridge.

12. Method according to one of the preceding claims, wherein the primary circuit (112) comprises at least one full bridge, the link voltage $U_{dc}$ or a zero potential being applied to a first switch node SW1 and to a second switch node SW2 at an instant in the full bridge.

13. Method according to Claim 11, wherein the following steps are carried out within a single switching period $t_p$:

   a) switching on the half bridge arranged in the primary circuit (112), so that a current $I_i$ through the inductance $L_i$ increases as a function of time until a zero crossing occurs for the current $I_i$;
   b) increasing the current $I_i$ further as a function of time until the half bridge arranged in the primary circuit (112) of the series resonant oscillating circuit (118) is switched off;
   c) decreasing the current $I_i$ as a function of time until a zero crossing occurs for the current $I_i$; and
   d) decreasing the current $I_i$ further as a function of time.

14. Method according to either of Claims 11 and 13, wherein a circuit (134) for power factor correction is connected to the switch nodes SW.

15. Method according to one of the preceding claims, wherein the series resonant converter (110) is optimized in respect of a minimal output voltage ripple or a minimal power loss.

16. Computer program which is adapted to carry out the steps of the method according to Claim 13.


**Revendications**

1. Procédé permettant de commander un convertisseur à résonance série (110), dans lequel le convertisseur à résonance série (110) présente un circuit primaire (112) et un circuit secondaire (114), dans lequel le circuit primaire (112) ou le circuit secondaire (114) présente un circuit oscillant à résonance série (118), dans lequel le circuit oscillant à résonance série (118) comprend au moins une capacité $C_1$ et au moins une inductance $L_i$, dans lequel une tension de circuit intermédiaire $U_{dc}$ est appliquée au circuit primaire (112), et dans lequel le circuit secondaire (114) fournit un courant de sortie moyen $\overline{I}_{out}$,
   **caractérisé en ce que** la commande du convertisseur à résonance série (110) est effectuée **en ce qu'**une valeur moyennée pour le courant de sortie $\overline{I}_{out}$ est réglée au moyen d'une fonction de transfert, dans lequel la fonction de transfert est une fonction de la tension de circuit intermédiaire $U_{dc}$, de la tension de sortie $U_{Cout}$, de l'inductance $L_i$, d'une période de commutation $t_p$ et d'un rapport cyclique D, dans lequel au moins la période de commutation $t_p$ et/ou le rapport cyclique D sont réglés.

2. Procédé selon la revendication précédente, dans lequel la fonction de transfert est en outre une fonction de ladite au moins une capacité $C_1$ du circuit oscillant à résonance série (118).

3. Procédé selon l'une quelconque des revendications précédentes, dans lequel le convertisseur à résonance série (110) fonctionne à une fréquence au-dessus d'une fréquence de résonance $f_R$, dans lequel la fréquence de résonance résulte de ladite au moins une capacité $C_1$ et de ladite au moins une inductance $L_i$ dans le circuit oscillant à résonance série (118).

4. Procédé selon l'une quelconque des revendications précédentes, dans lequel le circuit primaire (112) et le circuit secondaire (114) sont isolés galvaniquement l'un de l'autre par un transformateur (116).

5. Procédé selon l'une quelconque des revendications précédentes, dans lequel la fonction de transfert est une fonction pouvant être résolue de manière analytique.

6. Procédé selon l'une quelconque des revendications précédentes, dans lequel la valeur moyennée pour le courant de sortie $\bar{I}_{out}$ est déterminée au moyen de la fonction de transfert

$$\bar{I}_{out} = \frac{D(1-D)U_{dc}^2 - U_{Cout}^2}{4L_i U_{dc}} \cdot t_p$$

$$(1)$$

7. Procédé selon l'une quelconque des revendications précédentes, dans lequel le rapport cyclique D est réglé sur 0,1 à 0,9.

8. Procédé selon l'une quelconque des revendications précédentes, dans lequel la période de commutation $t_p$ est réglée sur 0,01 µs à 100 ms.

9. Procédé selon l'une quelconque des revendications précédentes, dans lequel la période de commutation $t_p$ et le rapport cyclique D sont réglés par l'actionnement des commutateurs $S_1$, $S_2$ présents dans le circuit primaire (112) indépendamment l'un de l'autre.

10. Procédé selon l'une quelconque des revendications précédentes, dans lequel la période de commutation $t_p$ et le rapport cyclique D sont déterminés au moyen d'un procédé numérique.

11. Procédé selon l'une quelconque des revendications précédentes, dans lequel le circuit primaire (112) présente au moins un demi-pont, dans lequel, à un moment donné, la tension de circuit intermédiaire $U_{dc}$ ou un potentiel nul est appliqué (e) à un noeud de commutation SW dans le demi-pont.

12. Procédé selon l'une quelconque des revendications précédentes, dans lequel le circuit primaire (112) présente au moins un pont intégral, dans lequel, à un moment donné, la tension de circuit intermédiaire $U_{dc}$ ou un potentiel nul est appliqué (e) à un premier noeud de commutation SW1 et à un deuxième noeud de commutation SW2 dans le pont intégral.

13. Procédé selon la revendication 11, dans lequel, à l'intérieur d'une seule période de commutation $t_p$, les étapes suivantes sont exécutées :

a) la mise en circuit du demi-pont disposé dans le circuit primaire (112) de sorte qu'un courant $I_i$ à travers l'inductance $L_i$ augmente dans le temps jusqu'à ce qu'un passage par zéro se produise pour le courant $I_i$ ;
b) une autre augmentation dans le temps du courant $I_i$ jusqu'à une mise hors circuit du demi-pont, disposé dans le circuit primaire (112), du circuit oscillant à résonance série (118) ;
c) une diminution dans le temps du courant $I_i$ jusqu'à ce qu'un passage par zéro se produise pour le courant $I_i$ ; et
d) une autre diminution dans le temps du courant $I_i$.

14. Procédé selon l'une quelconque des revendications 11 ou 13, dans lequel un circuit (134) est connecté au noeud de commutation SW pour corriger un facteur de puissance.

15. Procédé selon l'une quelconque des revendications précédentes, dans lequel le convertisseur à résonance série (110) est optimisé en ce qui concerne une ondulation de tension de sortie aussi faible que possible ou une puissance dissipée aussi faible que possible.

16. Programme informatique qui est conçu pour exécuter les étapes du procédé selon la revendication 13.

## Fig. 1a

## Fig. 1b

Fig. 1c

Fig. 1d

Fig. 2a

Fig. 2b

Fig. 2c

Fig. 2d

## Fig. 3a

## Fig. 3b

Fig. 4

Fig. 5

Fig. 6

Fig. 7a

Fig. 7b

t (μs)

Fig. 7c

Fig. 7d

## Fig. 7e

## Fig. 7f

## Fig. 7g

## Fig. 7h

EP 3 857 696 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015121991 A1
- DE 10143251 A1

- US 20120262954 A1

**In der Beschreibung aufgeführte Nicht-Patentliteratur**

- **VORPÉRIAN, V. ; CUK, S.** A complete DC analysis of the series resonant converter. *1982 IEEE Power Electronics Specialists conference,* 1982, 85-100
- ADC Controlled Half-Bridge LC Series Resonant Converter for LED Lighting. **MOUNIKA, D. ; POR-PANDISELVI, S.** 2nd International Conference on Communication and Electronics Systems. ICCES, 2017, 1037-1042

- Modeling and Simulation of Paralleled Series-Load-ed-Resonant Converter. **A. POLLERI, TAUFIK ; M. ANWARI.** Second Asia International Conference on Modelling & Simulation. IEEE Computer Society, 2008, 974-979
- **M. HEIDINGER ; C. SIMON ; F. DENK ; R. KLING ; W. HEERING.** Integrated PFC and series resonant frequency converter analysis and control. *19th European Conference on Power Electronics and Applications,* 11. September 2017